# EUROPEAN PATENT SPECIFICATION

(11) **EP 3 243 380 B1**
(45) Date of publication and mention of the grant of the patent: **17.03.2021**
(21) Application number: 17170541.1
(22) Date of filing: 11.05.2017
(51) Int. Cl.: A01K 23/00, A01K 29/00

(54) **STIMULATION DEVICE FOR BRINGING ABOUT URINATION OF A HOUSED FEMALE ANIMAL IN A CLOSED SPACE**
STIMULATIONSVORRICHTUNG UM DAS WASSERLASSEN BEI EINEM UNTERSTALLTEN WEIBLICHEN TIER IN EINEM GESCHLOSSENEN RAUM ZU INITIEREN
DISPOSITIF DE STIMULATION POUR CAUSER L'URINATION D'UN ANIMAL FEMELLE D'ETABLE DANS UN ESPACE FERMÉ

(30) Priority: 13.05.2016 NL 2016784
(43) Date of publication of application: 15.11.2017
(73) Proprietor: Hanskamp IP B.V., 7009 ZB Doetinchem (NL)
(72) Inventor: EBBERS, Johan Martin Wilhelmus, 7001 CN Doetinchem (NL); HANSKAMP, Hendrik Jan, 7009 ZB Doetinchem (NL)
(74) Representative: van Essen, Peter Augustinus

(56) References cited:
- EP-A1- 0 384 531
- WO-A1-01/30134
- WO-A1-01/33951
- Jose Castelan: "How make a cow pee!!!", YouTube, 14 July 2013 (2013-07-14), pages 1-1, XP054977690, Retrieved from the Internet: URL:https://www.youtube.com/watch?v=GqJRtK GfSvQ [retrieved on 2017-08-30]

## Description

The invention relates to a stimulation device for bringing about urination of a housed female animal in a closed space in which a single housed animal can be enclosed, and which closed space is provided with detection means for detecting the housed animal in the closed space.

It is known that, if urine of housed animals comes into contact with the faeces of housed animals, the chemical reaction will cause a sharp increase in the ammonia emission in an animal accommodation.

By bringing about urination of a housed animal, such as for instance a cow, in a closed space the urine of the housed animal can be separated as far as possible from the faeces thereof, whereby the ammonia emission will greatly decrease.

It is generally known that housed animals such as cows will begin to urinate when the perineum is stimulated. In India the perineum of a cow is stimulated by hand in order to collect the urine thereof in a bucket. In India diverse medicinal effects are attributed to the urine of the cow, but these are not the subject-matter of this invention.

The manual method from India is for economic reasons not suitable for application in a modern animal accommodation. WO01/30134 relates to a milking station with a manure plate for preventing contamination of milking equipment with urine and manure during milking.

It is the object of the invention to provide a stimulation device suitable for application in a modern animal accommodation. The invention provides for this purpose a stimulation device as according to claim 1. The stimulation device according to the invention is not known in the field and can advantageously be used to reduce ammonia emission in a modern animal accommodation. The positioning of the stimulating element takes place automatically during closing of the space, whereby the housed animal will begin to urinate.

The stimulating element preferably comprises a contact surface which makes contact with the perineum in the stimulation position, which contact surface is free of sharp or angular edges. As a result of this measure the perineum will not be irritated or injured.

In order to further stimulate urination the stimulation device can be further provided with vibrating means for bringing about vibration of the stimulating element in the stimulation position.

In order to move the tail of the housed animal out of the way, the contact surface comprises a tip-like portion. When the tip-like portion is placed close to the perineum, the tail of the housed animal will automatically move aside, whereby the stimulating element can be placed against the perineum.

In order to avoid infection of the housed animal with bacteria from other housed animals, the stimulation device is provided with disinfecting means for disinfecting the stimulating element following departure of the housed animal from the closed space. Known techniques can be applied to disinfect the stimulating element, including heating of or immersion of the stimulating element in a bactericidal liquid.

The stimulation device according to the invention preferably comprises detection means for detecting urination of the housed animal. Detection of the urination of the housed animal makes it possible for instance to activate further systems.

In an alternative embodiment of the stimulation device according to the invention the stimulation device comprises collecting means for collecting urine of the housed animal, which collecting means are attached to the positioning means. This embodiment is particularly suitable for application in existing closed spaces where there are no collecting means for the urine, such as a grating in the ground.

In a practical embodiment of the stimulation device according to the invention the closed space is a feed station.

In a first preferred embodiment of the stimulation device according to the invention the feed station comprises a passageway and the positioning means are configured to move the stimulating element between the stimulation position and a rest position in which the stimulating element is moved out of the passageway. The feed station preferably comprises a controllable fence for enclosing the housed animal on the rear side thereof, and the positioning means are configured for co-action with the fence. The positioning means preferably comprise one or more bars here which are connected to both the stimulating element and the fence. Because of these technical measures the stimulation device can be applied at an existing feed station as well as at a feed station yet to be developed.

In a second preferred embodiment of the stimulation device according to the invention the feed station is provided with identification means for identifying the housed animal, the positioning means are configured to move the stimulating element in the height and in longitudinal direction of the feed station and the stimulation device is configured for co-action with the identification means such that the positioning means adjust the stimulation position to the dimensions of the identified housed animal.

In the second preferred embodiment of the stimulation device according to the invention the positioning means preferably comprise a controllable arm on which the stimulating element is arranged. The controllable arm is preferably a mechanical (robot) arm which is drivable in three dimensions.

In both the first and the second preferred embodiment of the stimulation device according to the invention the feed station is preferably provided with a feed system for automatic feeding of the housed animal, which feed system co-acts with the identification means, and the stimulation device comprises second detection means for detecting urination of the housed animal and is configured for co-action with the feed system such that, when the urination is detected using the second detection means, the feed system dispenses feed to the housed animal. The housed animal hereby receives a reward as soon as it urinates. As a result the housed animal will in the future possibly learn the behaviour of beginning to urinate as soon as the perineum is stimulated by the stimulation device or of beginning to urinate when the housed animal enters the feed system and without stimulation of the perineum. Detection of urination can for instance take place by means of an infrared camera and associated image processing software.

The invention will be further elucidated with reference to the following figures, in which:
Figure 1 shows the first preferred embodiment of the stimulation device according to the invention;
Figure 2 shows the application of the first preferred embodiment of the stimulation device according to the invention in a feed station provided with a fence, wherein a housed animal has walked into the feed station;
Figure 3 shows the application of the first preferred embodiment of the stimulation device according to Figure 2 , wherein the fence of the feed station has been closed and the stimulating element lies against the perineum of the housed animal.

The same components are designated in the different figures with the same reference numerals.

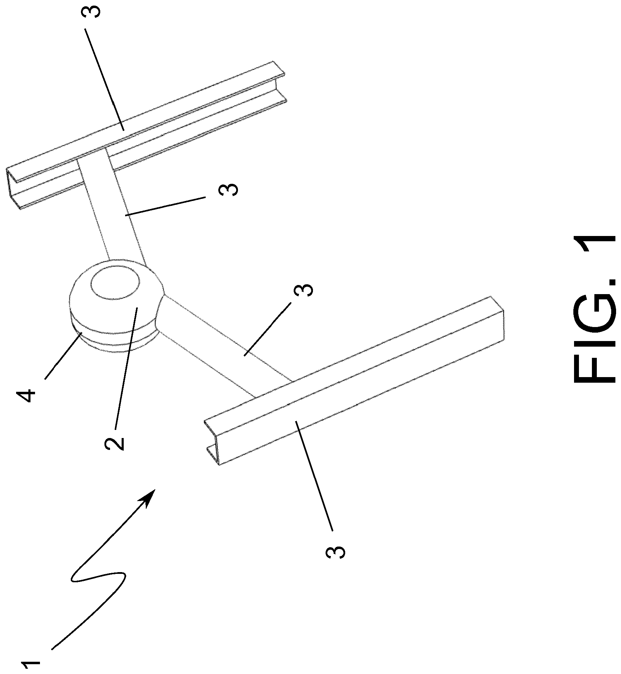

Figure 1 shows the first preferred embodiment of stimulation device 1 according to the invention. The first preferred embodiment is suitable for co-action with a feed station. Stimulation device 1 comprises a stimulating element 2 which in use lies against the perineum of the housed animal. Stimulating element 2 comprises for this purpose a contact surface 4 which is free of sharp or angular edges. The stimulating element can be provided internally with vibrating means for causing the stimulating element to vibrate during use of the device. The vibration can be an additional stimulus for urination. Contact surface 4 can comprise a tapering portion in order to prevent the tail of the housed animal lying between the perineum and contact surface 4. The tip portion will irritate the tail, whereby the housed animal will move the tail. Stimulation device 1 can be provided with disinfecting means for disinfecting stimulating element 2 following departure of the housed animal from the closed space. These disinfecting means are not shown. Collecting means can also be arranged under stimulation device 1 to collect urine of the housed animal. These collecting means are then attached to positioning means 3. Positioning means 3 consist of bars which form a frame. This frame can be attached to a fence of the feed station.

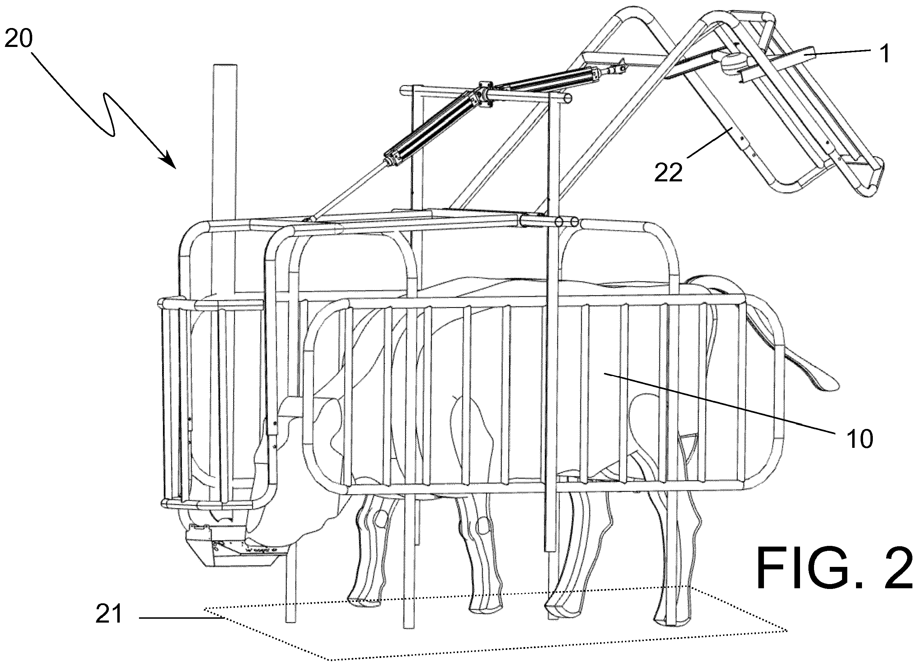

Figure 2 shows the application of the first preferred embodiment of stimulation device 1 according to the invention in a feed station 20 provided with a fence 22, wherein a housed animal 10 has walked into feed station 20 over passageway 21. Stimulation device 1 is (fixedly) connected to fence 22 which encloses housed animal 10 from behind.

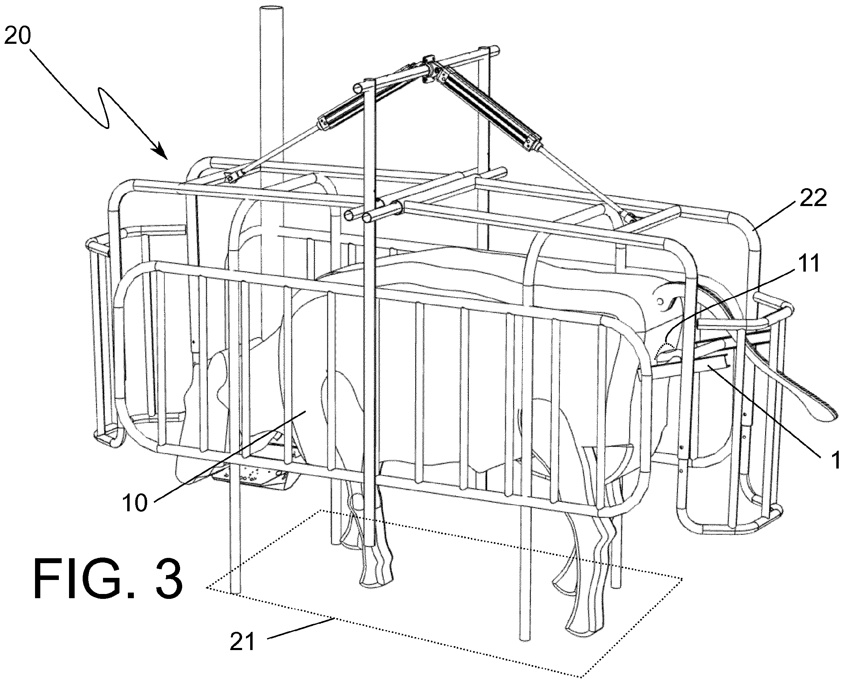

Figure 3 shows the application of the first preferred embodiment of stimulation device 1 according to Figure 2 , wherein fence 22 of feed station 20 is closed and stimulating element 2 lies against the perineum 11 of housed animal 10. Housed animal 10 will hereby begin to urinate. The urine can be collected in a grating in the floor, but can also be collected with collecting means arranged on stimulation device 1.

The invention is of course not limited to the shown and described preferred embodiments. All kinematic inversions which may apply to this invention form part of this description. The invention therefore comprises any embodiment falling within the scope of protection as defined in the claims in the light of the foregoing description and accompanying drawings.

It will also be clear that the above description and drawings are included to illustrate some embodiments of the invention, and not to limit the scope of protection. Starting from this disclosure, many more embodiments will be evident to a skilled person.

## Claims

1. Stimulation device (1) for bringing about urination of a housed female animal (10) in a closed space in which a single housed animal (10) can be enclosed, and which closed space is provided with first detection means for detecting the housed animal in the closed space, wherein the stimulation device (1) comprises a stimulating element (2) for stimulating the perineum (11) of the housed animal (10) and comprises positioning means for positioning the stimulating element (2) in a stimulation position, wherein the positioning means is adapted for placing the stimulating element (2) close to the perineum (11) after detection of the housed animal (10) in the closed space by the first detection means, and wherein the stimulation device (1) comprises collecting means for collecting urine of the housed animal.

2. Stimulation device (1) as claimed in claim 1, wherein the stimulating element (2) comprises a contact surface (4) which makes contact with the perineum (11) in the stimulation position, which contact surface (4) is free of sharp or angular edges.

3. Stimulation device (1) as claimed in claim 1 or 2, wherein the stimulation device (1) is provided with vibrating means for bringing about vibration of the stimulating element (2) in the stimulation position.

4. Stimulation device (1) as claimed in any of the foregoing claims, further comprising detection means for detecting urination of the housed animal, in particular detecting urination during said stimulation.

5. Stimulation device (1) as claimed in any of the foregoing claims when depending on claim 2, wherein the contact surface (4) comprises a tip-like portion.

6. Stimulation device (1) as claimed in any of the foregoing claims, wherein the stimulation device (1) is provided with disinfecting means for disinfecting the stimulating element (2) following departure of the housed animal (10) from the closed space.

7. Stimulation device (1) as claimed in any of the foregoing claims, wherein the collecting means are attached to the positioning means.

8. Stimulation device (1) as claimed in any of the foregoing claims, wherein the closed space is a feed station (20).

9. Stimulation device (1) as claimed in claim 8, wherein the feed station (20) comprises a passageway (21) and wherein the positioning means are configured to move the stimulating element (2) between the stimulation position and a rest position in which the stimulating element (2) is moved out of the passageway (21).

10. Stimulation device (1) as claimed in claim 9, wherein the feed station (20) comprises a controllable fence (22) for enclosing the housed animal (10) on the rear side thereof, and wherein the positioning means are configured for co-action with the fence (22).

11. Stimulation device (1) as claimed in claim 10, wherein the positioning means comprise one or more bars (3) which are connected to both the stimulating element (2) and the fence (22).

12. Stimulation device (1) as claimed in claim 8, which feed station (20) is provided with identification means for identifying the housed animal (10) and wherein the positioning means are configured to move the stimulating element in the height and in longitudinal direction of the feed station and wherein the stimulation device (1) is configured for co-action with the identification means such that the positioning means adjust the stimulation position to the dimensions of the identified housed animal.

13. Stimulation device (1) as claimed in claim 12, wherein the positioning means comprise a controllable arm on which the stimulating element (2) is arranged.

14. Stimulation device (1) as claimed in any of the claims 8-13, wherein the feed station (20) is provided with a feed system for automatic feeding of the housed animal (10), which feed system co-acts with the identification means, and wherein the stimulation device (1) comprises second detection means for detecting urination of the housed animal (10) and is configured for co-action with the feed system such that, when the urination is detected using the second detection means, the feed system dispenses feed to the housed animal (10).

15. Stimulation device (1) as claimed in any of the foregoing claims, further comprising identification means for identifying the housed animal, the positioning means are configured to move the stimulating element in the height and in longitudinal direction of the enclosed space and the stimulation device is configured for co-action with the identification means such that the positioning means adjust the stimulation position to the dimensions of the identified housed animal.

## Patentansprüche

1. Stimulationsvorrichtung (1) zum einleiten von Urinieren bei einem untergebrachten weiblichen Tier (10) in einem geschlossenen Raum in dem ein einzelnes untergebrachtes Tier (10) eingeschlossen werden kann, und welcher geschlossene Raum mit ersten Erfassungsmitteln zum Erfassen des untergebrachten Tieres in dem geschlossenen Raum versehen ist, wobei die Stimulationsvorrichtung (1) ein Stimulationselement (2) zum Stimulieren des Perineums (11) des untergebrachten Tieres (10) umfasst und Positionierungsmittel zum Positionieren des Stimulationselements (2) in einer Stimulationsposition umfasst, wobei das Positionierungsmittel eingerichtet ist um das Stimulationselement (2) in der Nähe des Perineums (11) zu platzieren nach dem Erfassung des untergebrachten Tieres (10) in dem geschlossenen Raum durch das erste Erfassungsmittel, und wobei die Stimulationsvorrichtung (1) Sammelmittel zum Sammeln von Urin des untergebrachten Tieres umfasst.

2. Stimulationsvorrichtung (1) nach Anspruch 1, wobei das Stimulationselement (2) eine Kontaktfläche (4) umfasst, die das Perineum (11) in der Stimulationsposition berührt, wobei die Kontaktfläche (4) frei von Schärfe oder ist eckige Kanten.

3. Stimulationsvorrichtung (1) nach Anspruch 1 oder 2, wobei die Stimulationsvorrichtung (1) mit Vibrationsmitteln versehen ist, um eine Vibration des Stimulationselements (2) in der Stimulationsposition zu bewirken.

4. Stimulationsvorrichtung (1) nach einem der vorstehenden Ansprüche, weiterhin umfassend Erfassungsmittel zum erfassen des urinieren des untergebrachten Tieres, ins besondere erfassen des urinieren wehrend der Stimulation.

5. Stimulationsvorrichtung (1) nach einem der vorstehenden Ansprüche, wobei die Kontaktfläche (4) einen spitzenartigen Abschnitt umfasst.

6. Stimulationsvorrichtung (1) nach einem der vorstehenden Ansprüche, wobei die Stimulationsvorrichtung (1) mit Desinfektionsmitteln zum Desinfizieren des Stimulationselements (2) nach Verlassen des untergebrachten Tieres (10) aus dem geschlossenen Raum versehen ist.

7. Stimulationsvorrichtung (1) nach einem der vorstehenden Ansprüche, wobei, die Sammelmittel an den Positionierungsmitteln angebracht sind.

8. Stimulationsvorrichtung (1) nach einem der vorstehenden Ansprüche, wobei der geschlossene Raum eine Zuführstation (20) ist.

9. Stimulationsvorrichtung (1) nach Anspruch 8, wobei die Zuführstation (20) einen Durchgang (21) umfasst und wobei die Positionierungsmittel konfiguriert sind um das Stimulationselement (2) zwischen der Stimulationsposition und einer Ruheposition zu bewegen, in der das Stimulationselement (2) aus dem Durchgang (21) herausbewegt wird.

10. Stimulationsvorrichtung (1) nach Anspruch 9, wobei die Futterstation (20) einen steuerbaren Zaun (22) zum Einschließen des untergebrachten Tieres (10) bei seiner Rückseite umfasst und wobei die Positionierungsmittel zum Zusammenwirken mit dem Zaun (22) konfiguriert sind.

11. Stimulationsvorrichtung (1) nach Anspruch 10, wobei die Positionierungsmittel eine oder mehrere Stangen (3) umfassen, die sowohl mit dem Stimulationselement (2) als auch mit dem Zaun (22) verbunden sind.

12. Stimulationsvorrichtung (1) nach Anspruch 8, wobei die Futterstation (20) mit Identifikationsmitteln zum Identifizieren des untergebrachten Tieres (10) versehen ist und wobei die Positionierungsmittel konfiguriert sind, um das Stimulationselement in der Höhe und in Längsrichtung der Fütterungsstation zu bewegen und wobei die Stimulationsvorrichtung (1) für die Zusammenarbeit mit den Identifikationsmitteln konfiguriert ist, so dass die Positionierungsmittel die Stimulationsposition an die Abmessungen des identifizierten untergebrachten Tieres anpassen.

13. Stimulationsvorrichtung (1) nach Anspruch 12, wobei das Positionierungsmittel einen steuerbaren Arm umfasst, auf dem das Stimulationselement (2) angeordnet ist.

14. Stimulationsvorrichtung (1) nach einem der Ansprüche 8-13, wobei die Fütterungsstation (20) mit einem Fütterungssystem zum automatischen Füttern des untergebrachten Tieres (10) versehen ist, wobei das Fütterungssystem mit den Identifizierungsmitteln zusammenwirkt und wobei die Stimulationsvorrichtung (1) eine zweite Erfassungseinrichtung zum Erfassen des Urinierens des untergebrachten Tieres (10) umfasst und für die Zusammenarbeit mit dem Futtersystem so konfiguriert ist, dass wenn das Urinieren unter Verwendung der zweiten Erfassungseinrichtung erfasst wird, das Futtersystem Futter an das untergebrachte Tier (10) abgibt.

15. Stimulationsvorrichtung (1) nach einem der vorstehenden Ansprüche, weiterhin umfassend ersten Erfassungsmitteln zum Erfassen des untergebrachten Tieres, wobei die Positionierungsmittel konfiguriert sind um das Stimulationselement in der Höhe und in Längsrichtung des geschlossenen Raums zu bewegen und wobei die Stimulationsvorrichtung (1) für die Zusammenarbeit mit den Identifikationsmitteln konfiguriert ist, so dass die Positionierungsmittel die Stimulationsposition an die Abmessungen des identifizierten untergebrachten Tieres anpassen.

## Revendications

1. Dispositif de stimulation (1) pour provoquer la miction d'un animal femelle logé (10) dans un espace fermé dans lequel un seul animal logé (10) peut être enfermé, et cet espace fermé est pourvu de premiers moyens de détection pour détecter l'animal logé dans l'espace fermé, dans lequel le dispositif de stimulation (1) comprend un élément de stimulation (2) pour stimuler le périnée (11) de l'animal logé (10) et comprend des moyens de positionnement pour positionner l'élément de stimulation (2) dans une position de stimulation, dans lequel les moyens de positionnement sont adaptée pour placer l'élément de stimulation (2) à proximité du périnée (11) après détection de l'animal logé (10) dans l'espace clos par les premiers moyens de détection, et dans lequel la dispositif de stimulation (1) comprend des moyens de collecte pour collecter l'urine de l'animal logé.

2. Dispositif de stimulation (1) selon la revendication 1, dans lequel l'élément de stimulation (2) comprend une surface de contact (4) qui entre en contact avec le périnée (11) dans la position de stimulation, laquelle surface de contact (4) est exempte de bords angulaires.

3. Dispositif de stimulation (1) selon la revendication 1 ou 2, dans lequel le dispositif de stimulation (1) est pourvu de moyens vibrants pour provoquer la vibration de l'élément de stimulation (2) dans la position de stimulation.

4. Dispositif de stimulation (1) selon l'une quelconque des revendications précédentes, comprenant en outre des moyens de détection d'urination de l'animal logé.

5. Dispositif de stimulation (1) selon l'une quelconque des revendications précédentes quant dépendent de la revendication 2, dans lequel la surface de contact (4) comprend une partie en forme de pointe.

6. Dispositif de stimulation (1) selon l'une quelconque des revendications précédentes, dans lequel le dispositif de stimulation (1) est pourvu de moyens de désinfection pour désinfecter l'élément de stimulation (2) après le départ de l'animal logé (10) de l'espace fermé.

7. Dispositif de stimulation (1) selon l'une quelconque des revendications précédentes, dans lesquels moyens de collecte sont fixés aux moyens de positionnement.

8. Dispositif de stimulation (1) selon l'une quelconque des revendications précédentes, dans lequel l'espace fermé est une station d'alimentation (20).

9. Dispositif de stimulation (1) selon la revendication 7, dans lequel la station d'alimentation (20) comprend un passage (21) et dans lequel les moyens de positionnement sont configurés pour déplacer l'élément de stimulation (2) entre la position de stimulation et une position de repos dans laquelle le l'élément de stimulation (2) est déplacé hors du passage (21).

10. Dispositif de stimulation (1) selon la revendication 9, dans lequel le poste d'alimentation (20) comprend une clôture contrôlable (22) pour enfermer l'animal logé (10) sur la face arrière de celui-ci, et dans lequel les moyens de positionnement sont configurés pour une coopération avec la clôture (22).

11. Dispositif de stimulation (1) selon la revendication 10, dans lequel les moyens de positionnement comprennent une ou plusieurs barres (3) qui sont connectées à la fois à l'élément de stimulation (2) et à la clôture (22).

12. Dispositif de stimulation (1) selon la revendication 8, lequel poste d'alimentation (20) est pourvu de moyens d'identification pour identifier l'animal logé (10) et dans lequel les moyens de positionnement sont configurés pour déplacer l'élément de stimulation dans la hauteur et dans la direction longitudinale du poste d'alimentation et dans lequel le dispositif de stimulation (1) est configuré pour coopérer avec les moyens d'identification de telle sorte que les moyens de positionnement ajustent la position de stimulation aux dimensions de l'animal logé identifié.

13. Dispositif de stimulation (1) selon la revendication 11, dans lequel les moyens de positionnement comprennent un bras contrôlable sur lequel l'élément de stimulation (2) est disposé.

14. Dispositif de stimulation (1) selon l'une quelconque des revendications 8-13, dans lequel le poste d'alimentation (20) est pourvu d'un système d'alimentation pour l'alimentation automatique de l'animal logé (10), lequel système d'alimentation coopère avec les moyens d'identification, et dans lequel le dispositif de stimulation (1) comprend un second moyen de détection pour détecter la miction de l'animal logé (10) et est configuré pour coopérer avec le système d'alimentation de telle sorte que, lorsque la miction est détectée en utilisant le second moyen de détection, l'aliment le système distribue de la nourriture à l'animal logé (10).

15. Dispositif de stimulation (1) selon l'une quelconque des revendications précédentes, comprenant en outre des moyens pour identifier l'animal logé, les moyens de positionnement sont configurés pour déplacer l'élément de stimulation dans la hauteur et dans la direction longitudinale de l'espace fermé et la dispositif de stimulation est configuré pour coopérer avec les moyens d'identification de telle sorte que les moyens de positionnement ajustent la position de stimulation aux dimensions de l'animal logé identifié.
